# EUROPÄISCHE PATENTSCHRIFT

(11) **EP 0 832 155 B1**
(45) Veröffentlichungstag und Bekanntmachung des Hinweises auf die Patenterteilung: **30.04.2008**
(21) Anmeldenummer: 97919278.8
(22) Anmeldetag: 21.03.1997
(51) Int. Cl.: C08K 3/22, C08L 27/12, F16C 33/20

(54) **Gleitschichtmaterial**
Sliding Layer Material
Matière de couche de glissement

(30) Priorität: 10.04.1996 DE 19614105
(43) Veröffentlichungstag der Anmeldung: 01.04.1998
(73) Patentinhaber: Federal-Mogul Wiesbaden GmbH, 65201 Wiesbaden (DE)
(72) Erfinder: ADAM, Achim, D-64569 Nauheim (DE)
(86) Internationale Anmeldenummer: PCT/DE1997/000590
(87) Internationale Veröffentlichungsnummer: WO 1997/038046

(56) Entgegenhaltungen:
- DE-A- 4 105 657
- DE-A- 4 142 287
- DATABASE WPI Section Ch, Week 9329 Derwent Publications Ltd., London, GB; Class A14, AN 93-231997 XP002036368 & JP 05 154 961 A (SUMITOMO ELECTRIC CO) , 22.Juni 1993

## Beschreibung

Die Erfindung bezieht sich auf die Verbesserung der Verschleiß- und Kavitationsfestigkeit von Kunststoffgleitschichten an Verbundwerkstoffen, die als Lager für den ölgeschmierten Einsatz Anwendung finden. Insbesondere leistet die Erfindung die Erhöhung der Lebensdauer von Stoßdämpfern und Verbundlagern in Anwendungen mit stoßdämpferähnlichen Bedingungen.

Werkstoffe für Verbundlager mit Kunststoffgleitschicht bestehen aus einer metallischen Stützschicht, vorzugsweise aus Stahl, Bronze oder einer hochfesten Aluminiumlegierung und einer direkt auf dem Metallrücken aufgebrachten geschlossenen Kunststoffgleitschicht. Alternativ hierzu kann die Kunststoffgleitschicht auch so auf einer porösen Zwischenschicht aus Sintermetall aufgebracht sein, dass auch die Poren vollständig mit Kunststoffmaterial gefüllt sind. Die Kunststoffgleitschicht weist PTFE als Basismaterial auf und enthält verschleiß- und reibungsmindernde Zusätze.

Für solche Lagerungen unter Anwesenheit von Öl, ist ein sehr niedriger Reibungskoeffizient bei gleichzeitig hoher Verschleiß- und Kavitationsbeständigkeit von großer Bedeutung, wie z. B. in Stoßdämpfern, die in der Automobilindustrie eingesetzt werden oder auch in Zahnradpumpen oder hydraulischen Motoren. Aufgrund der erforderlichen niedrigen Reibungskoeffizienten müssen solche Werkstoffe nach heutigem Kenntnisstand zu einem großen Teil aus PTFE bestehen, da alle anderen bekannten, wenn auch in ihren sonstigen Eigenschaften geeigneten Kunststoffe nicht diesen Ansprüchen genügen.

Da PTFE alleine zu weich ist, und daher einen hohen Verschleißkoeffizienten aufweist, müssen Materialien beigemischt werden, die der Kavitation und dem Verschleiß entgegenwirken, ohne den Reibungskoeffizienten wesentlich zu erhöhen.

Die zur Zeit am häufigsten im genannten Anwendungsbereich gebrauchten Lagerwerkstoffe bestehen aus Stahlrücken, poröser Bronzeschicht und einem Kunststoffmaterial, das zu ca. 80 Vol.% aus PTFE und zum Rest aus Blei oder Molybdändisulfid besteht. Das Kunststoffmaterial ist daher in das Bronzegerüst eingedrückt und bildet darüber eine dünne geschlossene Schicht. Materialien dieses Aufbaus neigen allerdings unter extremen Bedingungen, wie sie z. B. in Stoßdämpfern durch hohe Lasten, hohe Gleitgeschwindigkeiten und Beschleunigungen und hohe Strömungsgeschwindigkeiten im Lagerspalt entstehen, zu Erosions- und Kavitationserscheinungen, und haben daher, besonders bei hoher Beanspruchung, nur eine begrenzte Lebensdauer.

Es ist zwar möglich, Werkstoffe herzustellen, die unter den beschriebenen Bedingungen kaum Verschleiß und keinerlei Kavitationsanfälligkeit aufweisen, wenn man anstelle des PTFE einen anderen thermoplastischen Werkstoff wie beispielsweise PVDF oder PEEK einsetzt, jedoch muss in solchen Fällen eine deutliche Erhöhung der Reibung bei Ölschmierung in Kauf genommen werden.

In vielen Schriften werden Zusammensetzungen auf PTFE-Basis vorgeschlagen, die bislang jedoch nur vergleichsweise geringe Verbesserungen gegenüber den oben genannten Standardwerkstoffen darstellen, und dabei meist einen erhöhten Reibwert aufweisen, wie im Falle des Calciumsfluorid in der EP 183 375 A2 oder der Polyimide, die in DE 42 27 909 C2 vorgeschlagen werden.

Aus der DE 41 42 287 ist ein Trockengleitlager bekannt, das einen Stützkörper mit einer Gleitschicht umfasst. Die Gleitschicht enthält eine Mischung von Metall/Metalloxid mit Fluorpolymeren, wobei als Metall Blei vorgesehen ist. Die Gleitschicht kann zusätzlich Fe₃O₄ enthalten, wobei keine Angaben zu den Anteilen des Eisenoxids gemacht werden.

Die WO 95/02772 schlägt vor, zur Verschleiß- und Kavitationsminderung eine Aramidfaser-Pulpe einzusetzen, was mit Problemen bei der homogenen Einmischung dieser Faser verbunden ist und entsprechende Zusatzeinrichtungen in der Produktion erfordert.

Im Gegensatz hierzu ist es Aufgabe der Erfindung, ein Gleitschichtmaterial zur Verfügung zustellen, mit dem man ohne Änderung der Produktionsprozesse und ohne Beeinträchtigung des Reibwerts unter Öl zu Lebensdauern gelangt, welche die der entsprechenden Werkstoffe gemäß dem Stand der Technik um ein Mehrfaches übertreffen können.

Gelöst wird diese Aufgabe durch ein Gleitschichtmaterial, das gekennzeichnet ist durch
(i) 0,5 - 10 Vol.% Eisenoxid,
(ii) 55 - 90 Vol.% eines oder mehrerer thermoplastischer Fluorkunststoffe,
(iii) 9,5 - 44,5 Vol.% Bleioxid, Metallsulfide mit Schichtstruktur, Metallfluoride, Bornitride, Graphit, Ruß und/oder Koks, und
(iv) gegebenenfalls weitere übliche Zusätze,
wobei (i), (ii), (iii) und gegebenenfalls (iv) so gewählt wurden, dass sie zusammen 100 Vol.% ergeben.

Vorteilhafte Modifikationen und Ausgestaltungen der Erfindung werden in den abhängigen Ansprüchen unter Schutz gestellt.

Insbesondere gelingt es durch die Verwendung von Eisenoxid als verschleiß-und kavitationshemmendem Zusatz in Kunststoffgleitschichten, die überwiegend aus thermoplastischen Fluorpolymeren bestehen, von Verbundlager für ölgeschmierte Anwendungen, die Lebensdauer dieser Verbundlager für ölgeschmierte Anwendungen deutlich zu erhöhen, ohne den außerordentlich geringen Reibwert der Kunststoffgleitschichten unter Öl nachteilig zu beeinflussen.

Dabei genügt im Rahmen der Erfindung ein geringer Zusatz von Eisenoxid zu den ansonsten üblichen Standardzusammensetzungen für Kunststoffgleitschichten von Verbundwerkstoffen.

Die Möglichkeit der Verwendung von Eisenoxid als Füllstoff in selbstschmierenden Lagerwerkstoffen auf PTFE-Basis ist zwar oft erwähnt, wie z. B. in der DE 41 05 657 C2, jedoch nur als "neutrales Element" und austauschbar gegen andere Oxide oder Oxidkombinationen und nicht als zwingend notwendig zur Erzielung einer bestimmten Eigenschaft. Darüber hinaus wird in diesem Patent zusätzlich die Anwesenheit eines schmelzbaren Fluorthermoplasten vorausgesetzt und der Einsatz von metallischem Blei mit einer spezifischen Oberfläche verlangt.

In der JP 04114094 A2 wird Eisenoxid zusammen mit Glasfasern in PTFE für Gleitelemente im Kontakt mit Nahrungsmitteln empfohlen. Dies kommt für die oben beschriebenen Einsatzfälle nicht in Frage, da Hartstoffpartikel wie auch Glas unerwünschte abrasive Wirkung haben und die Funktion der Bauteile in diesen Fällen mit der Zeit beeinträchtigen und außerdem einen zu hohen Reibwert bedingen.

Überraschenderweise hat sich gezeigt, dass bei Zusatz von Eisenoxid zu Werkstoffen auf PTFE-Basis die Zerrüttung der Gleitoberfläche aufgrund von Kavitationserscheinungen stark abgeschwächt wird. Im Einsatz ohne Anwesenheit von Schmierstoffen schneiden die Werkstoffe mit Eisenoxid-Zugabe dagegen schlechter ab als die entsprechenden Eisenoxid-freien Zusammensetzungen. Ein Zusammenhang mit der Beständigkeit von Gleitlagerwerkstoffen unter den oben genannten Bedingungen mit Eisenoxid-Beigaben ist vorher nie hergestellt worden.

Als Eisenoxid wird in bevorzugter Ausführungsform Fe₂O₃ verwendet. Im Hinblick auf das Kunststoffmaterial der Gleitschicht ist es günstig, wenn dieses überwiegend aus PTFE besteht.

Anteile aus PTFE können dabei auch durch Anteile anderer Fluorthermoplaste ersetzt sein. Zu den im Rahmen der Erfindung einsetzbaren Fluorthermoplasten gehören u. a. Homopolymere wie PCTFE (Polychlortrifluorethylen), PVDF (Polyvinylidenfluorid), PVF (Polyvinylfluorid), alternierende Copolymere wie ETFE (Polyethylen-alt-tetrafluorethylen), CM-1 (Polyvinyliden-alt-hexafluorpropylen) und/oder statistische Copolymere wie FEP (Polyetrafluorethylen-co-hexafluorpropylen) und PFA (Copolymeres aus Tetrafluorethylen und Perfluorvinylalkylether). Auch die Verwendung weiterer Zusätze wie Fasern, Kunststoffe, Hartstoffe, Farbstoffe etc. ist im Rahmen o. g. Anteilsverhältnisse möglich.

In einer bevorzugten Ausführungsform besitzt das Gleitschichtmaterial folgende Zusammensetzung:
(i) 1-6 Vol.% Fe₂O₃,
(ii) 65 - 75 Vol.% PTFE oder einem Gemisch mehrerer thermoplastischer Fluorpolymerer mit PTFE als Hauptkomponente,
(iii) 24 - 34 Vol.% Bleioxid, Molybdändisulfid, Metallfluoride, Bornitrid, Graphit, Ruß und/oder Koks, und gegebenenfalls zusätzlich
(iv) Faser, Kunststoffe, Hartstoffe und/oder Farbstoffe,
wobei (i), (ii), (iii) und (iv) 100 Vol.% ergeben.

Fe₂O₃ wird am besten in roter und/oder brauner α-Modifikation verwendet.

Im Rahmen der Erfindung sind weiterhin bevorzugt die Verwendung von Fe₂O₃ als sphärischem Primärkorn mit einer mittleren Partikelgröße von ≤ 5 µm.

Besonders zweckmäßig ist die Verwendung von Fe₂O₃ mit Partikelgrößen ≤ 5 µm.

Besonders gute Ergebnisse werden mit Fe₂O₃ in Verbindung mit Füllstoffkombinationen aus Metallsulfiden mit Schichtstruktur und hexagonalem Bornitrid erzielt.

Beispielhaft sind drei mögliche Ausführungsformen den entsprechenden Materialien ohne Zusatz von Fe₂O₃ gegenübergestellt. Die Zusammensetzungen sind in der Tabelle 1 angegeben.

**Tab. 1**

| Beispiel Nr. | Zusammensetzung Vol.% | |
|---|---|---|
| 1 | PTFE | 70 |
| | MoS₂ | 27 |
| | Fe₂O₃ | 3 |
| 2 | PTFE | 70 |
| | MoS₂ | 30 |
| 3 | PTFE | 70 |
| | Graphit | 27 |
| | Fe₂O₃ | 3 |
| 4 | PTFE | 70 |
| | Graphit | 30 |
| 5 | PTFE | 70 |
| | BN | 13,5 |
| | MoS₂ | 13,5 |
| | Fe₂O₃ | 3 |
| 6 | PTFE | 70 |
| | BN | 15 |
| | MoS₂ | 15 |

Die Herstellung der Proben kann in bekannter Weise erfolgen:
- Homogenes Aufschlämmen der Füllstoffe und des Eisenoxids in Wasser mit Hilfe eines nichtionischen Netzmittels;
- Zugabe einer 30%igen PTFE-Dispersion und homogenes Vermischen;
- Herbeiführung der Koagulation des Gemisches mit Hilfe von Aluminiumnitrat-Lösung;
- Entfernung überschüssigen Wassers und Fertigrühren bis zur beschichtungsgerechten Konsistenz der Masse;
- Einwalzen des Gemisches in das auf Stahl aufgebrachte poröse Bronzegerüst;
- Sintern des PTFE bei 380°C;
- Heißverdichten der Gesamtstruktur durch Walzen.

Buchsen aus diesen Materialien wurden einem Stoßdämpfertest unterzogen, bei dem die Lebensdauer unter besonderen Kavitations- und verschleißfördernden Bedingungen ermittelt wurde. Geprüft wurden Buchsen mit einer Laufflächenbreite von 10 mm in Zweirohrdämpfern mit einem Stangendurchmesser von 22 mm bei einer konstanten Seitenbelastung von 2000 N. Dabei wurden abwechselnd 20 s lang eine rampenförmige und eine sinusförmige Bewegung von je 0,5 Hz und eine Doppelamplitude von 80 mm ausgeführt, bis sich die Zerstörung der Gleitschicht durch Undichtigkeit des Dämpfers bemerkbar machte. Spätestens nach 120 h wurden die Tests jedoch abgebrochen.

Darüber hinaus wurden die Reibwerte der Materialien am System Buchse/Stange unter Tropfölschmierung bei einer spezifischen Belastung von 3 MPa und einer Gleitgeschwindigkeit von 0,01 m/s gemessen.

Die Daten sind in Tabelle 2 zusammengefasst.

**Tab. 2**

| Beispiel Nr. | Lebensdauer im Kav.-Test [h] | Reibwert, geölt |
|---|---|---|
| 1 | 85 | 0,022 |
| 2 | 37 | 0,020 |
| 3 | 17 | 0,038 |
| 4 | 5 | 0,034 |
| 5 | > 120 (Test abgebrochen) | 0,016 |
| 6 | 33 | 0,017 |

Diese Ergebnisse verdeutlichen, wie stark der positive Einfluss des Eisenoxids auf die Verschleiß- und Kavitationsbeständigkeit ist und dass der Reibwert kaum davon beeinflusst wird.

## Patentansprüche

1. Gleitschichtmaterial für Verbundlager für ölgeschmierte Anwendungen, **gekennzeichnet durch**
(i) 0,5-10 Vol.% Eisenoxid
(ii) 55 - 90 Vol.% eines oder mehrerer thermoplastischer Fluorkunststoffe und
(iii) 9,5 - 44,5 Vol.% Bleioxid, Metallsulfide mit Schichtstruktur, Metallfluoride, Bornitrid, Graphit, Ruß und/oder Koks besteht,
wobei das Gleitschichtmaterial gegebenenfalls
(iv) noch weitere übliche Zusätze enthalten kann,
wobei (i), (ii), (iii) und (iv) so gewählt werden, dass sie zusammen 100 Vol.% ergeben.

2. Gleitschichtmaterial nach Anspruch 1, **dadurch gekennzeichnet**, das das Eisenoxid Fe₂O₃ ist.

3. Gleitschichtmaterial nach Anspruch 1 oder 2, **dadurch gekennzeichnet, dass** die thermoplastischen Kunststoffe überwiegend PTFE aufweisen.

4. Gleitschichtmaterial nach einem oder mehreren der vorhergehenden Ansprüche, **gekennzeichnet durch**
(i) 1-6 Vol.% Fe₂O₃
(ii) 65 - 75 Vol.% PTFE oder einem Gemisch mehrerer Fluorkunststoffe mit PTFE als Hauptkomponente und
(iii) 24 - 34 Vol.% Bleioxid, Molybdändisulfid, Metallfluoride, Bornitrid, Graphit, Ruß und/oder Koks,
und gegebenenfalls zusätzlich
(iv) Fasern, Kunststoffe, Hartstoffe und/oder Farbstoffe in der Kunststoffgleitschicht,
wobei (i) + (ii) + (iii) + (iv) 100 Vol.% ergeben.

5. Gleitschichtmaterial nach einem oder mehreren der vorhergehenden Ansprüche, **gekennzeichnet durch** Fe₂O₃ in roter und/oder brauner α-Modifikation.

6. Gleitschichtmaterial nach einem oder mehreren der vorhergehenden Ansprüche, **gekennzeichnet durch** Fe₂O₃ als sphärisches Primärkorn mit einer mittleren Partikelgröße ≤ 5 µm.

7. Gleitschichtmaterial nach einem oder mehreren der vorhergehenden Ansprüche, **gekennzeichnet durch** Fe₂O₃ mit Partikelgrößen ≤ 5 µm.

8. Gleitschichtmaterial nach einem oder mehreren der vorhergehenden Ansprüche, **gekennzeichnet durch** Metallsulfide mit Schichtstruktur und/oder hexagonales Bornitrid.

9. Schichtverbundwerkstoff mit einer Kunststoffgleitschicht auf einer porösen Sinterschicht, die sich auf einem Stahlrücken befindet, **dadurch gekennzeichnet, dass** die Kunststoffgleitschicht aus einem Gleitschichtmaterial gemäß einem der Ansprüche 1 bis 8 besteht.

10. Stoßdämpferstangenführungselement, **dadurch gekennzeichnet, dass** es ein Gleitschichtmaterial nach einem der Ansprüche 1 bis 8 aufweist.

## Claims

1. Sliding layer material for composite bearings for oil-lubricated applications, **characterized by**
(i) 0.5 - 10% by volume of iron oxide,
(ii) 55 - 90% by volume of one or more thermoplastic fluorine plastics and
(iii) 9.5 - 44.5% by volume of lead oxide, metal sulphides having a layer structure, metal fluorides, boron nitride, graphite, carbon black and/or coke,
it being possible for the sliding layer material optionally
(iv) also to contain further customary additives,
(i), (ii), (iii) and (iv) being chosen so that they together give 100% by volume.

2. Sliding layer material according to Claim 1,
**characterized in that** the iron oxide is Fe₂O_{3.}

3. Sliding layer material according to Claim 1 or 2, **characterized in that** the thermoplastic plastics predominantly comprise PTFE.

4. Sliding layer material according to one or more of the preceding Claims, **characterized by**
(i) 1-6% by volume of Fe₂O₃,
(ii) 65-75% by volume of PTFE or a mixture of a plurality of fluorine plastics with PTFE as the main component and
(iii) 24-34% by volume of lead oxide, molybdenum disulphide, metal fluorides, boron nitride, graphite, carbon black and/or coke,
and optionally additionally
(iv) fibres, plastics, hard materials and/or dyes in the plastic sliding layer,
(i) + (ii) + (iii) + (iv) giving 100% by volume.

5. Sliding layer material according to one or more of the preceding Claims, **characterized by** Fe₂O₃ in the red and/or brown α-modification.

6. Sliding layer material according to one or more of the preceding Claims, **characterized by** Fe₂O₃ as spherical primary particles having a mean particle size of ≤ 5µm.

7. Sliding layer material according to one or more of the preceding Claims, **characterized by** Fe₂O₃ having particle sizes of ≤ 5µm.

8. Sliding layer material according to one or more of the preceding Claims, **characterized by** metal sulphides having a layer structure and/or hexagonal boron nitride.

9. Laminated material having a plastic sliding layer on a porous sintered layer which is present on a steel backing, **characterized in that** the plastic sliding layer consists of a sliding layer material according to any of Claims 1 to 8.

10. Shock absorber rod guide element, **characterized in that** it has a sliding layer material according to any of Claims 1 to 8.

## Revendications

1. Matériau de couche de glissement pour paliers composites pour des applications lubrifiées à l'huile, **caractérisé par**
(i) 0,5 à 10 % en volume d'oxyde de fer,
(ii) 55 à 90 % en volume d'un ou de plusieurs matières plastiques fluorés thermoplastiques, et
(iii) 9,5 à 44,5 % en volume d'oxyde de plomb, de sulfures métalliques avec une structure en couches, de fluorures métalliques, de nitrure de bore, de graphite, de suie et/ou de coke,
dans lequel le matériau de couche de glissement peut éventuellement encore comporter
(iv) d'autres additifs usuels,
dans lequel (i), (ii), (iii) et (iv) sont sélectionnés de façon telle qu'ils forment ensemble 100 % en volume.

2. Matériau de couche de glissement selon la revendication 1, **caractérisé en ce que** l'oxyde de fer est Fe₂O₃.

3. Matériau de couche de glissement selon la revendication 1 ou 2, **caractérisé en ce que** les matières plastiques thermoplastiques présentent majoritairement du PTFE.

4. Matériau de couche de glissement selon une ou plusieurs des revendications précédentes, **caractérisé par**
(i) 1 à 6 % en volume de Fe₂O₃,
(ii) 65 à 75 % en volume de PTFE ou d'un mélange de plusieurs matières plastiques fluorés avec du PTFE en tant que principal constituant, et
(iii) 24 à 34 % en volume d'oxyde de plomb, de bisulfure de molybdène, de fluorures métalliques, de nitrure de bore, de graphite, de suie et/ou de coke,
et éventuellement, en outre,
(iv) des fibres, des matières plastiques, des matériaux durs ou à résistance mécanique élevée et/ou des colorants dans la couche de glissement en matière plastique,
dans lequel (i) + (ii) + (iii) + (iv) forment 100 % en volume.

5. Matériau de couche de glissement selon une ou plusieurs des revendications précédentes, **caractérisé par** Fe₂O₃ en modification α rouge et/ou brune.

6. Matériau de couche de glissement selon une ou plusieurs des revendications précédentes, **caractérisé par** Fe₂O₃ en tant que grain primaire sphérique présentant une taille moyenne de particules ≤ 5 µm.

7. Matériau de couche de glissement selon une ou plusieurs des revendications précédentes, **caractérisé par** Fe₂O₃ présentant des tailles de particules ≤ 5 µm.

8. Matériau de couche de glissement selon une ou plusieurs des revendications précédentes, **caractérisé par** des sulfures métalliques ayant une structure en couches et/ou du nitrure de bore hexagonal.

9. Matériau composite en couches comportant une couche de glissement en matière plastique sur une couche frittée poreuse, qui se trouve sur une partie arrière en acier, **caractérisé en ce que** la couche de glissement plastique se compose d'un matériau de couche de glissement selon l'une des revendications 1 à 8.

10. Élément de guidage d'une tige d'amortisseur, **caractérisé en ce qu'**il présente un matériau de couche de glissement selon l'une des revendications 1 à 8.
